(19) Europäisches Patentamt
European Patent Office
Office européen des brevets

(11) EP 1 150 568 B1

(12) **EUROPÄISCHE PATENTSCHRIFT**

(45) Veröffentlichungstag und Bekanntmachung des Hinweises auf die Patenterteilung:
**22.09.2004 Patentblatt 2004/39**

(21) Anmeldenummer: **00903619.5**

(22) Anmeldetag: **24.01.2000**

(51) Int Cl.[7]: **A01N 47/12**, A01N 43/50
// A01N47:12, A01N43:50

(86) Internationale Anmeldenummer:
**PCT/EP2000/000505**

(87) Internationale Veröffentlichungsnummer:
**WO 2000/045638 (10.08.2000 Gazette 2000/32)**

(54) **FUNGIZIDE WIRKSTOFFKOMBINATIONEN**

FUNGICIDAL ACTIVE SUBSTANCE COMBINATIONS

COMBINAISONS DE PRINCIPES ACTIFS FONGICIDES

(84) Benannte Vertragsstaaten:
**AT BE CH CY DE DK ES FI FR GB GR IE IT LI LU MC NL PT SE**

(30) Priorität: **02.02.1999 DE 19904081**

(43) Veröffentlichungstag der Anmeldung:
**07.11.2001 Patentblatt 2001/45**

(73) Patentinhaber: **Bayer CropScience AG
40789 Monheim (DE)**

(72) Erfinder:
- **WACHENDORFF-NEUMANN, Ulrike
D-56566 Neuwied (DE)**
- **STENZEL, Klaus
D-40595 Düsseldorf (DE)**
- **SEITZ, Thomas
D-40764 Langenfeld (DE)**

(56) Entgegenhaltungen:
**EP-A- 0 610 764**
**WO-A-96/03044**
**WO-A-99/27788**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 150 568 B1

## Beschreibung

Die vorliegende Anmeldung betrifft neue Wirkstoffkombinationen, die aus Valinamid-Derivaten einerseits und Fenamidone andererseits bestehen und sehr gut zur Bekämpfung von phytopathogenen Pilzen geeignet sind.

Es ist bereits bekannt, daß Valinamid-Derivate fungizide Eigenschaften besitzen (vgl. EP-A 472 996). Die Wirksamkeit dieses Stoffes ist gut; sie läßt jedoch bei niedrigen Aufwandmengen in manchen Fällen zu wünschen übrig.

Ferner ist schon bekannt, daß Fenamidone zur Bekämpfung von Pilzen eingesetzt werden kann (vgl. EP-A 0 629 616). Die Wirkung von Fenamidone ist aber bei niedrigen Aufwandmengen nicht immer befriedigend. WO 99/27788 beschreibt fungizide Zusammensetzungen, enthaltend 2-Imidazolin-5-one, und weitere Fungizide wie Fencaramide, das bevorzugt zusammen mit Fusetyl-Al eingesetzt wird.

Es wurde nun gefunden, daß die neuen Wirkstoffkombinationen aus Valinamid-Derivaten der allgemeinen Formel (I)

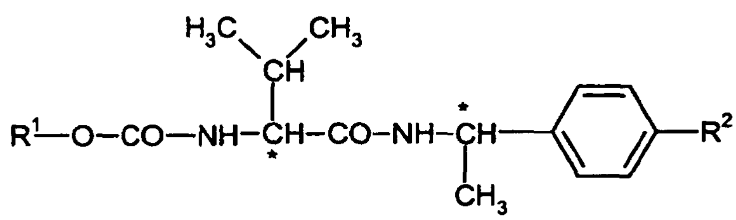

(I),

in welcher

$R^1$ für i-Propyl oder s-Butyl und

$R^2$ für Chlor, Methyl, Ethyl oder Methoxy steht,

und
Fenamidone der Formel (II)

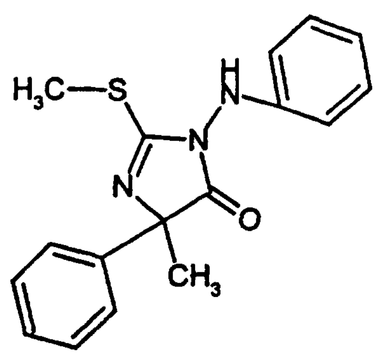

(II)

sehr gute fungizide Eigenschaften besitzen.

Überraschenderweise ist die fungizide Wirkung der erfindungsgemäßen Wirkstoffkombinationen wesentlich höher als die Summe der Wirkungen der einzelnen Wirkstoffe. Es liegt ein nicht vorhersehbarer echter synergistischer Effekt vor und nicht nur eine Wirkungsergänzung.

Aus der Strukturformel für die Wirkstoffe der Formel (I) ist ersichtlich, daß die Verbindungen zwei asymmetrisch substituierte Kohlenstoffatome aufweisen. Das Produkt kann daher als Gemisch von verschiedenen Isomeren oder auch in Form eines einzigen Isomeren vorliegen.

Bevorzugte Verbindungen der Formel (I) sind Verbindungen, in denen der Aminosäureteil aus i-Propyloxycarbonyl-L-valin oder sec-Butyloxycarbonyl-L-valin gebildet wird und der Phenethylaminteil entweder racemisch ist oder die S(-)-Konfiguration, insbesondere aber die R(+)-Konfiguration aufweist.

Besonders bevorzugte Verbindungen der Formel (I) sind die Verbindungen, in denen

$R^1$ für i-Propyl steht.

Insbesondere seien die Verbindungen
[2-Methyl-1-[[[-1-(4-chlorphenyl)ethyl]amino]carbonyl]-propyl]-carbaminsäure-1-methylethylester der Formel (Ia)

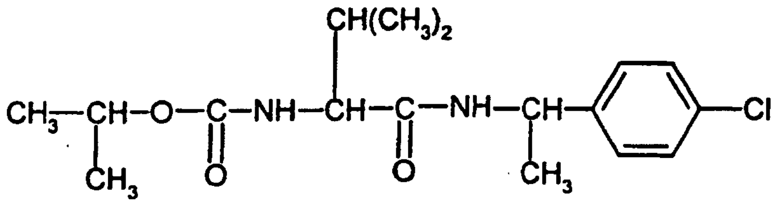

(Ia)

[2-Methyl-1-[[[-1-(4-methylphenyl)ethyl]amino]carbonyl]-propyl]-carbaminsäure-1-methylethylester der Formel (Ib)

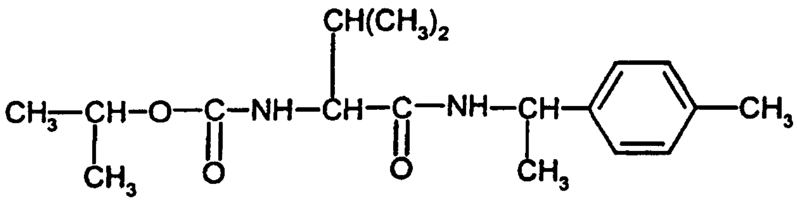

(Ib)

[2-Methyl-1-[[[-1-(4-ethylphenyl)ethyl]amino]carbonyl]-propyl]-carbaminsäure-1-methylethylester der Formel (Ic)

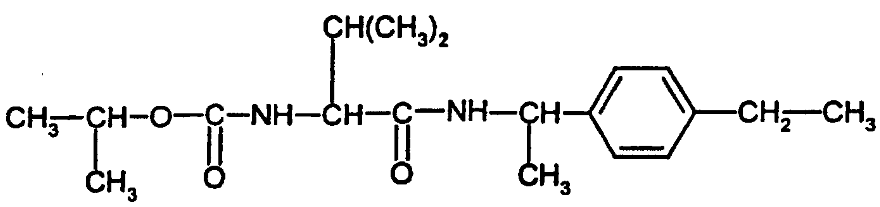

(Ic)

und [2-Methyl-1-[[[-1-(4-methoxyphenyl)ethyl]amino]carbonyl]-propyl]-carbaminsäure-1-methylethylester der Formel (Id)

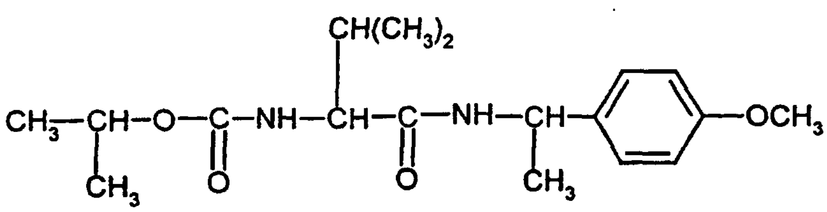

(Id)

und deren Isomere, wie oben erwähnt, genannt.

Die Wirkstoffe der Formel (I) sind bekannt (vgl. EP-A-0 472 996).

Der in den erfindungsgemäßen Kombinationen außerdem vorhandene fungizide Wirkstoff Fenamidone ist ebenfalls bekannt (vgl. EP-A 0 629 616).

Die erfindungsgemäßen Wirkstoffkombinationen enthalten neben mindestens einem Wirkstoff der Formel (I) den Wirkstoff Fenamidone der Formel (II). Sie können darüber hinaus auch weitere fungizid wirksame Zumischkomponenten enthalten.

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden. Im allgemeinen entfallen

auf 1 Gewichtsteil an Wirkstoff der Formel (I)

0,1 bis 10 Gewichtsteile, vorzugsweise
0,2 bis 2 Gewichtsteile an Wirkstoff der Formel (II).

Die erfindungsgemäßen Wirkstoffkombinationen besitzen sehr gute fungizide Eigenschaften und lassen sich vor allem zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen.

Die erfindungsgemäßen Wirkstoffkombinationen eignen sich besonders gut zur protektiven Bekämpfung von Phytophthora infestans und Alternaria spec. an Tomaten und Kartoffeln, sowie Plasmopara viticola an Weinreben.

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz- und Saatgut, und des Bodens.

Die erfindungsgemäßen Wirkstoffkombinationen können in die üblichen Formulierungen übergeführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe bzw. der Wirkstoffkombinationen mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel. Als Emulgier- und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycol-ether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Die erfindungsgemäßen Wirkstoffkombinationen können in den Formulierungen in Mischung mit anderen Wirkstoffen vorliegen, wie Fungizide, Insektizide, Akarizide und Herbizide, sowie in Mischungen mit Düngemitteln oder Pflanzenwachstumsregulatoren.

Für solche Mischungen kommen beispielsweise infrage:

**Fungizide:**

2-Aminobutan; 2-Anilino-4-methyl-6-cyclopropyl-pyrimidin; 2',6'-Dibromo-2-methyl-4'-trifluoromethoxy-4'-trifluoromethyl-1,3-thiazol-5-carboxanilid; 2,6-Dichloro-N-(4-trifluoromethylbenzyl)benzamid; (E)-2-Methoxyimino-N-methyl-2-(2-phenoxyphenyl)acetamid; 8-Hydroxyquinolinsulfat; Methyl-(E)-2-{2-[6-(2-cyanophenoxy)pyrimidin-4-yloxy]phenyl}-3-methoxyacrylat; Methyl-(E)-methoximino[alpha-(o-tolyloxy)-o-tolyl]acetat; 2-Phenylphenol (OPP),

Aldimorph, Ampropylfos, Anilazin, Azaconazol,
Benalaxyl, Benodanil, Benomyl, Binapacryl, Biphenyl, Bitertanol, Blasticidin-S, Bromuconazole, Bupirimate, Buthiobate,
Calciumpolysulfid, Captafol, Captan, Carbendazim, Carboxin, Chinomethionat (Quinomethionat), Chloroneb, Chloropicrin, Chlorothalonil, Chlozolinat, Cufraneb, Cymoxanil, Cyproconazole, Cyprofuram,
Dichlorophen, Diclobutrazol, Diclofluanid, Diclomezin, Dicloran, Diethofencarb, Difenoconazol, Dimethirimol, Dimethomorph, Diniconazol, Dinocap, Diphenylamin, Dipyrithion, Ditalimfos, Dithianon, Dodin, Drazoxolon,
Edifenphos, Epoxyconazole, Ethirimol, Etridiazol,
Fenarimol, Fenbuconazole, Fenfuram, Fenitropan, Fenpiclonil, Fenpropidin, Fenpropimorph, Fentinacetate, Fentinhydroxyd, Ferbam, Ferimzone, Fluazinam, Fludioxonil, Fluoromide, Fluquinconazole, Flusilazole, Flusulfamide, Flutolanil, Flutriafol, Folpet, Fosetyl-Aluminium, Fthalide, Fuberidazol, Furalaxyl, Furmecyclox,
Guazatine,
Hexachlorobenzol, Hexaconazol, Hymexazol,
Imazalil, Imibenconazol, Iminoctadin, Iprobenfos (IBP), Iprodion, Isoprothiolan,
Kasugamycin, Kupfer-Zubereitungen, wie: Kupferhydroxid, Kupfernaphthenat, Kupferoxychlorid, Kupfersulfat, Kupferoxid, Oxin-Kupfer and Bordeaux-Mischung,
Mancopper, Mancozeb, Maneb, Mepanipyrim, Mepronil, Metalaxyl, Metconazol, Methasulfocarb, Methfuroxam, Metiram, Metsulfovax, Myclobutanil,
Nickel dimethyldithiocarbamat, Nitrothal-isopropyl, Nuarimol,
Ofurace, Oxadixyl, Oxamocarb, Oxycarboxin,
Pefurazoat, Penconazol, Pencycuron, Phosdiphen, Pimaricin, Piperalin, Polyoxin, Probenazol, Prochloraz, Procymidon, Propamocarb, Propiconazole, Propineb, Pyrazophos, Pyrifenox, Pyrimethanil, Pyroquilon,
Quintozen (PCNB),
Schwefel und Schwefel-Zubereitungen,
Tebuconazol, Tecloftalam, Tecnazen, Tetraconazol, Thiabendazol, Thicyofen, Thiophanat-methyl, Thiram, Tolclophos-methyl, Tolylfluanid, Triadimefon, Triadimenol, Triazoxid, Trichlamid, Tricyclazol, Tridemorph, Triflumizol, Triforin, Triticonazol,
Validamycin A, Vinclozolin,
Zineb, Ziram

**Bakterizide:**

Bronopol, Dichlorophen, Nitrapyrin, Nickel dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

**Insektizide / Akarizide / Nematizide:**

Abamectin, AC 303 630, Acephat, Acrinathrin, Alanycarb, Aldicarb, Alphamethrin, Amitraz, Avermectin, AZ 60541, Azadirachtin, Azinphos A, Azinphos M, Azocyclotin,
Bacillus thuringiensis, Bendiocarb, Benfuracarb, Bensultap, Betacyluthrin, Bifenthrin, BPMC, Brofenprox, Bromophos A, Bufencarb, Buprofezin, Butocarboxin, Butylpyridaben,
Cadusafos, Carbaryl, Carbofuran, Carbophenothion, Carbosulfan, Cartap, CGA 157 419, CGA 184699, Chloethocarb, Chlorethoxyfos, Chloretoxyfos, Chlorfenvinphos, Chlorfluazuron, Chlormephos, Chlorpyrifos, Chlorpyrifos M, Cis-Resmethrin, Clocythrin, Clofentezin, Cyanophos, Cycloprothrin, Cyfluthrin, Cyhalothrin, Cyhexatin, Cypermethrin, Cyromazin,
Deltamethrin, Demeton M, Demeton S, Demeton-S-methyl, Diafenthiuron, Diazinon, Dichlofenthion, Dichlorvos, Dicliphos, Dicrotophos, Diethion, Diflubenzuron, Dimethoat, Dimethylvinphos, Dioxathion, Disulfoton,
Edifenphos, Emamectin, Esfenvalerat, Ethiofencarb, Ethion, Ethofenprox, Ethoprophos, Etofenprox, Etrimphos,
Fenamiphos, Fenazaquin, Fenbutatinoxid, Fenitrothion, Fenobucarb, Fenothiocarb, Fenoxycarb, Fenpropathrin, Fenpyrad, Fenpyroximat, Fenthion, Fenvalerate, Fipronil, Fluazinam, Flucycloxuron, Flucythrinat, Flufenoxuron, Flufenprox, Fluvalinate, Fonophos, Formothion, Fosthiazat, Fubfenprox, Furathiocarb,
HCH, Heptenophos, Hexaflumuron, Hexythiazox,
Imidacloprid, Iprobenfos, Isazophos, Isofenphos, Isoprocarb, Isoxathion, Ivemectin,
Lamda-cyhalothrin, Lufenuron,
Malathion, Mecarbam, Mervinphos, Mesulfenphos, Metaldehyd, Methacrifos, Methamidophos, Methidathion, Methiocarb, Methomyl, Metolcarb, Milbemectin, Monocrotophos, Moxidectin,

Naled, NC 184, NI 25, Nitenpyram
Omethoat, Oxamyl, Oxydemethon M, Oxydeprofos,
Parathion A, Parathion M, Permethrin, Phenthoat, Phorat, Phosalon, Phosmet, Phosphamdon, Phoxim, Pirimicarb, Pirimiphos M, Primiphos A, Profenofos, Profenophos, Promecarb, Propaphos, Propoxur, Prothiofos, Prothiophos, Prothoat, Pymetrozin, Pyrachlophos, Pyraclofos, Pyraclophos, Pyradaphenthion, Pyresmethrin, Pyrethrum, Pyridaben, Pyrimidifen, Pyriproxifen,
Quinalphos,
RH 5992,
Salithion, Sebufos, Silafluofen, Sulfotep, Sulprofos,
Tebufenozid, Tebufenpyrad, Tebupirimphos, Teflubenzuron, Tefluthrin, Temephos, Terbam, Terbufos, Tetrachlorvinphos, Thiafenox, Thiodicarb, Thiofanox, Thiomethon, Thionazin, Thuringiensin, Tralomethrin, Triarathen, Triazophos, Triazuron, Trichlorfon, Triflumuron, Trimethacarb,
Vamidothion, XMC, Xylylcarb, YI 5301 / 5302, Zetamethrin.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden. Die Anwendung geschieht in üblicher Weise, z.B. durch Gießen, Verspritzen, Versprühen, Verstreuen, Verstreichen, Trockenbeizen, Feuchtbeizen, Naßbeizen, Schlämmbeizen oder Inkrustieren.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001%.

Bei der Saatgutbehandlung werden im allgemeinen Wirkstoffmengen von 0,001 bis 50 g je Kilogramm Saatgut, vorzugsweise 0,01 bis 10 g benötigt.

Bei Behandlung des Bodens sind Wirkstoffkonzentrationen von 0,00001 bis 0,1 Gew.-%, vorzugsweise von 0,0001 bis 0,02 Gew.-%, am Wirkungsort erforderlich.

Die gute fungizide Wirkung der erfindungsgemäßen Wirkstoffkombinationen geht aus den nachfolgenden Beispielen hervor. Während die einzelnen Wirkstoffe in der fungiziden Wirkung Schwächen aufweisen, zeigen die Kombinationen eine Wirkung, die über eine einfache Wirkungssummierung hinausgeht.

Ein synergistischer Effekt liegt bei Fungiziden immer dann vor, wenn die fungizide Wirkung der Wirkstoffkombinationen größer ist als die Summe der Wirkungen der einzeln applizierten Wirkstoffe.

Die zu erwartende Wirkung für eine gegebene Kombination zweier Wirkstoffe kann (vgl. Colby, S.R., "Calculating Synergistic and Antagonistic Responses of Herbicide Combinations", Weeds 15, Seiten 20-22, 1967) wie folgt berechnet werden:

Wenn

X den Wirkungsgrad, ausgedrückt in % der unbehandelten Kontrolle, beim Einsatz des Wirkstoffes A in einer Konzentration von m g/ha,

Y den Wirkungsgrad, ausgedrückt in % der unbehandelten Kontrolle, beim Einsatz des Wirkstoffes B in einer Konzentration von n g/ha,

E den erwarteten Wirkungsgrad, ausgedrückt in % der unbehandelten Kontrolle, beim Einsatz des Wirkstoffes A und B in einer Konzentrationen von m und n g/ha bedeutet,

dann ist $E = X + Y - \frac{X \cdot N}{100}$ .

Ist die tatsächliche fungizide Wirkung größer als berechnet, so ist die Kombination in ihrer Wirkung überadditiv, d.h. es liegt ein synergistischer Effekt vor. In diesem Fall muß der tatsächlich beobachtete Wirkungsgrad größer sein als der aus der oben angeführten Formel errechnete Wert für den erwarteten Wirkungsgrad (E).

**Beispiel**

**Plasmopara-Test (Rebe) / protektiv**

Zur Herstellung einer zweckmäßigen Wirkstoffzubereitung werden entweder handelsübliche Wirkstoff-Formulierungen (einzelne Wirkstoffe oder Wirkstoffkombinationen), oder 1 Gewichtsteil Wirkstoff mit 4,7 Gewichtsteilen Lösungsmittel (Aceton) und 0,3 Gewichtsteilen Emulgator (Alkyl-Aryl-Polyglykolether) vermischt und mit Wasser auf die jeweils gewünschte Konzentration verdünnt.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer wässrigen Sporensuspension von *Plasmopara viticola* inokuliert und verbleiben dann 1 Tag in einer Inkubationskabine bei ca. 20°C und 100 % relativer Luftfeuchtigkeit. Anschließend werden die Pflanzen 5 Tage im Gewächshaus bei ca. 21°C und ca. 90 % Luftfeuchtigkeit aufgestellt. Die Pflanzen werden dann angefeuchtet und 1 Tag in eine Inkubationskabine gestellt.

6 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, daß kein Befall beobachtet wird.

Die gefundene Wirkung der erfindungsgemäßen Wirkstoffkombination ist größer als die berechnete, d.h. es liegt ein synergistischer Effekt vor. Die Kombination Iprovalicarb und Fenamidone besitzt bei einem Mischungsverhältnis von 1:1 und einer Aufwandmenge von 5 g/ha einen tatsächlichen Wirkungsgrad von 98 %. Der nach der Colby-Formel berechnete Erwartungswert ist mit 45 % bedeutend niedriger.

## Patentansprüche

1. Wirkstoffkombinationen, enthaltend mindestens ein Valinamid-Derivat der Formel (I)

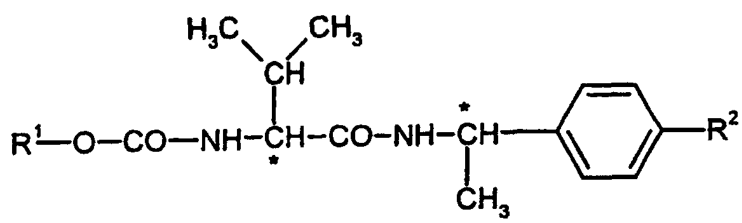

(I),

in welcher

$R^1$ für i-Propyl oder s-Butyl und

$R^2$ für Chlor, Methyl, Ethyl oder Methoxy steht,

und
Fenamidone der Formel (II)

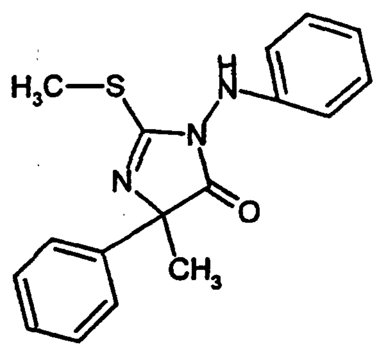

(II).

2. Wirkstoffkombinationen gemäß Anspruch 1, **dadurch gekennzeichnet, daß** in den Wirkstoffkombinationen das Gewichtsverhältnis von Wirkstoff der Formel (I) zu Wirkstoff der Formel (II) 1:0,1 bis 1:10 beträgt.

3. Verfahren zur Bekämpfung von Pilzen, **dadurch gekennzeichnet, daß** man Wirkstoffkombinationen wie in Anspruch 1 definiert auf die Pilze und/oder deren Lebensraum einwirken läßt.

4. Fungizide Mittel, enthaltend einen Gehalt an einer Wirkstoffkombination wie in Anspruch 1 definiert.

**5.** Verwendung von Wirkstoffkombinationen bzw. Mittel wie in den Ansprüchen 1 bis 4 defniert zur Bekämpfung von Pilzen.

**6.** Verfahren zur Herstellung von fungiziden Mitteln, **dadurch gekennzeichnet, daß** man Wirkstoffkombinationen gemäß Anspruch 1 mit Streckmitteln und/oder oberflächenaktiven Stoffen vermischt.

## Claims

**1.** Active compound combinations, comprising at least one valinamide derivative of the formula (I)

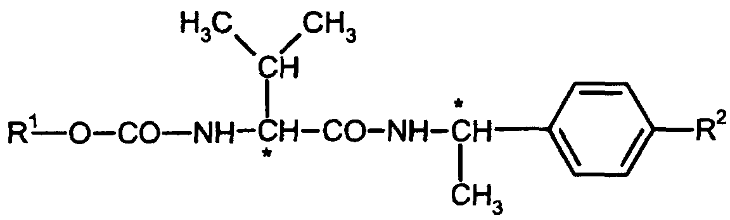

(I),

in which

$R^1$ represents i-propyl or s-butyl and

$R^2$ represents chlorine, methyl, ethyl or methoxy,

and
fenamidone of the formula (II)

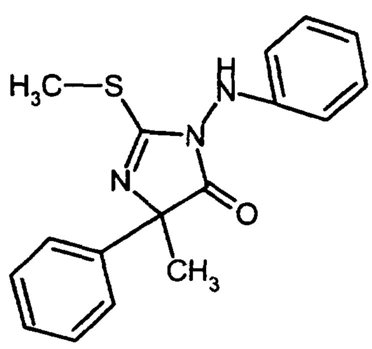

(II).

**2.** Active compound combinations according to Claim 1, **characterized in that** in the active compound combinations the weight ratio of active compound of the formula (I) to active compound of the formula (II) is from 1:0.1 to 1:10.

**3.** Method for controlling fungi, **characterized in that** active compound combinations as defined in Claim 1 are allowed to act on the fungi and/or their habitat.

**4.** Fungicidal compositions, comprising an active compound combination as defined in Claim 1.

**5.** Use of active compound combinations or compositions as defined in Claims 1 to 4 for controlling fungi.

**6.** Process for preparing fungicidal compositions, **characterized in that** active compound combinations according to Claim 1 are mixed with extenders and/or surfactants.

**Revendications**

1. Combinaisons de substances actives, contenant au moins un dérivé de valinamide de formule (I)

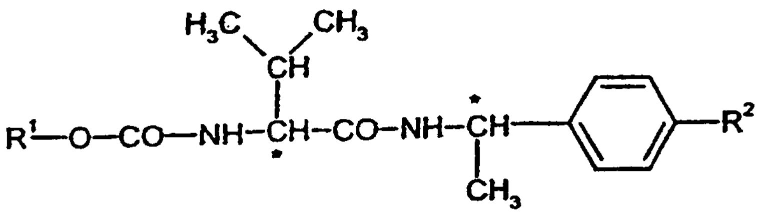

(I),

dans laquelle

$R^1$ est un reste isopropyle ou sec.-butyle et
$R^2$ représente le chlore, un reste méthyle, éthyle ou méthoxy,

et
de la fénamidone de formule (II)

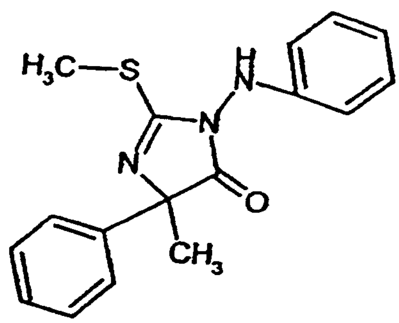

(II).

2. Combinaisons de substances actives suivant la revendication 1, **caractérisées en ce que** le rapport en poids de la substance active de formule (I) à la substance active de formule (II) est de 1:0,1 à 1:10 dans les combinaisons de substances actives.

3. Procédé de lutte contre les champignons, **caractérisé en ce qu'**on fait agir des combinaisons de substances actives telles que définies dans la revendication 1 sur les champignons et/ou sur leur milieu.

4. Compositions fongicides, ayant une teneur en une combinaison de substances actives telle que définie dans la revendication 1.

5. Utilisation de combinaisons de substances actives ou de compositions telles que définies dans les revendications 1 à 4 pour combattre des champignons.

6. Procédé de préparation de compositions fongicides, **caractérisé en ce qu'**on mélange des combinaisons de substances actives suivant la revendication 1 avec des diluants et/ou des agents tensioactifs.